Europäisches Patentamt

European Patent Office

Office européen des brevets

(11) Veröffentlichungsnummer : **0 326 783 B1**

(12) **EUROPÄISCHE PATENTSCHRIFT**

(45) Veröffentlichungstag der Patentschrift :
**12.08.92 Patentblatt 92/33**

(51) Int. Cl.⁵ : **B25F 5/00**

(21) Anmeldenummer : **88810788.5**

(22) Anmeldetag : **16.11.88**

(54) **Motorisch betriebenes Handgerät.**

(30) Priorität : **30.01.88 DE 3802740**

(43) Veröffentlichungstag der Anmeldung :
**09.08.89 Patentblatt 89/32**

(45) Bekanntmachung des Hinweises auf die
Patenterteilung :
**12.08.92 Patentblatt 92/33**

(84) Benannte Vertragsstaaten :
**CH DE FR GB LI NL**

(56) Entgegenhaltungen :
**EP-A- 0 150 669**
**EP-A- 0 153 724**
**EP-A- 0 235 670**
**DE-A- 2 326 087**

(56) Entgegenhaltungen :
**DE-A- 3 500 324**
**FR-A- 2 526 359**
**GB-A- 2 086 277**
**US-A- 4 063 600**
**US-A- 4 287 969**

(73) Patentinhaber : **HILTI Aktiengesellschaft**
**FL-9494 Schaan (LI)**

(72) Erfinder : **Odoni, Walter, Dr.**
**Am Schrägen Weg 12**
**FL-9490 Vaduz (LI)**
Erfinder : **Boesch, Richard**
**Meienriet 309**
**CH-9406 Rüthi (CH)**

(74) Vertreter : **Wildi, Roland**
**Hilti Aktiengesellschaft Patentabteilung**
**FL-9490 Schaan (LI)**

## Beschreibung

Die Erfindung betrifft ein motorisch betriebenes Handgerät, wie Bohrhammer, Bohr- oder Schleifmaschine und dgl. mit einem Gehäuse und einem darin angeordneten Antriebsmotor, einer aus dem Gehäuse ragenden Aufnahmespindel zur Uebertragung einer Drehbewegung auf ein Werkzeug und einer im Gehäuse koaxial zur Aufnahmespindel drehbar gelagerten, über ein Federelement mit dem Gehäuse verbundenen Trägheitsmasse. Ein Handgerät dieser Art ist aus der DE-A-3 041 099 bekannt.

Handgeräte der geschilderten Art werden vor allem von Handwerkern, jedoch in steigender Zahl auch von Heimwerkern angewendet. Bei diesen Geräten besteht die Gefahr, dass sich das Werkzeug verklemmt und die Aufnahmespindel somit blockiert wird, was dazu führt, dass sich als Reaktion das Gehäuse um die Achse der Aufnahmespindel dreht. Ist die Bedienungsperson auf eine solche Reaktion nicht gefasst, so kann ihr das Handgerät aus den Händen gerissen werden oder die Bedienungsperson kann beim Arbeiten in exponierten Lagen wie beispielsweise auf Gerüsten oder Leitern aus dem Gleichgewicht gebracht werden und abstürzen. Das Blockieren des Werkzeuges kann ausserdem zu Ueberbeanspruchungen in den Gelenken der Bedienungsperson führen.

Um solche Schäden zu vermeiden, ist es beispielsweise aus der DE-A-2 326 087 bekannt, zwischen dem Antriebsmotor und der Aufnahmespindel eine bei Ueberschreiten eines vorbestimmten Drehmomentes auslösbare Ueberlastkupplung anzuordnen. Beim Auslösen der Ueberlastkupplung wird der Drehantrieb zwischen dem Antriebsmotor und der Aufnahmespindel unterbrochen, wobei jedoch von der Bedienungsperson ein entsprechend grosses Reaktions-Drehmoment aufgebracht werden muss. Wird dieses Reaktions-Drehmoment von der Bedienungsperson nicht aufgebracht, so erfolgt keine Trennung des Drehantriebes und die Einrichtung bleibt wirkungslos.

Bei einer weiteren, aus der DE-A-3 041 099 bekannten Lösung ist im Gehäuse eine Trägheitsmasse koaxial zur Aufnahmespindel drehbar gelagert. Wenn bei einem Blockieren des Werkzeuges sich das Gehäuse um die Aufnahmespindel dreht, so bleibt die drehbar gelagerte Trägheitsmasse infolge ihrer Massenträgheit stehen und es erfolgt somit eine Relativverdrehung zwischen dem Gehäuse und der Trägheitsmasse. Diese Relativverdrehung wird mittels eines vorzugsweise berührungslosen Sensors festgestellt und dabei ein Signal erzeugt, das beispielsweise zum Abschalten der Energiezufuhr, zum Betätigen einer Kupplung oder einer elektromechanischen Bremse verwendet wird. Zur Rückführung der Trägheitsmasse in ihre Ausgangslage ist die Trägheitsmasse über ein Federelement mit dem Gehäuse verbunden. Diese bekannte Lösung erfordert teure elektronische und elektromechanische Bauelemente, die empfindlich und für den rauhen Baustellenbetrieb nur bedingt geeignet sind.

Der Erfindung liegt die Aufgabe zugrunde, eine einfache und sichere Einrichtung der eingangs genannten Gattung zu schaffen, die bei einem plötzlichen Verdrehen des Gehäuses um die Achse der Aufnahmespindel auf die Aufnahmespindel ein Bremsmoment ausübt.

Gemäss der Erfindung wird dies dadurch erreicht, dass die Trägheitsmasse die Aufnahmespindel umgibt und das Federelement als die Aufnahmespindel umfassende, bei einer Relativverdrehung des Gehäuses gegenüber der Trägheitsmasse in der einen Drehrichtung auf die Aufnahmespindel ein Bremsmoment ausübende Schlingfeder ausgebildet ist.

Durch die Ausbildung des Federelementes als Schlingfeder kommen diesem Element zwei Funktionen zu. Diese werden in zwei unterschiedlichen Zuständen des Federelementes ausgeübt. Im einen entlasteten Zustand soll die Schlingfeder die Trägheitsmasse im Ausgangszustand in einer bestimmten Drehstellung gegenüber dem Gehäuse halten. Wenn es jedoch infolge einer plötzlichen Verdrehung des Gehäuses gegenüber der Aufnahmespindel zu einer Relativverdrehung zwischen der Trägheitsmasse und dem Gehäuse kommt, legt sich die Schlingfeder an die Oberfläche der Aufnahmespindel an und übt in diesem anderen Zustand infolge Reibung ein Bremsmoment auf die Aufnahmespindel aus. Dieses Bremsmoment ist etwa proportional zur Auslenkung des Gehäuses gegenüber der Trägheitsmasse.

Bei einer Relativverdrehung des Gehäuses gegenüber der Trägheitsmasse wird die Schlingfeder gespannt. Infolge ihrer Elastizität neigt die Schlingfeder dazu, sich zu entspannen und diese Relativverdrehung wieder aufzuheben. Dabei wird auch die Ausübung des Bremsmomentes wieder aufgehoben. Um dies zu vermeiden, ist zweckmässigerweise zwischen der Trägheitsmasse und dem Gehäuse ein Rastelement vorgesehen, das bei Einleitung eines durch die Schlingfeder ausgeübten Bremsmomentes einrückbar ist. Das Rastelement sichert somit die Trägheitsmasse gegenüber dem Gehäuse in der verdrehten Stellung und gewährleistet, dass das Bremsmoment so lange ausgeübt wird, bis entweder das Rastelement wieder gelöst wird oder kein Drehmoment mehr auftritt. Das Rastelement kann beispielsweise als Kugelraste oder dgl. ausgebildet werden.

Zur Aufhebung der Drehbewegung zwischen der Aufnahmespindel und dem Gehäuse muss die im Rotor des Antriebsmotors sowie in den zwischen dem Antriebsmotor und der Aufnahmespindel angeordneten Wellen

2

und Zahnrädern enthaltene kinetische Energie in Reibungswärme umgesetzt werden. Dies ist jedoch innert kurzer Zeit nicht möglich und führt ausserdem bei häufigem Ansprechen zu thermischer Ueberbelastung der Elemente. Um dies zu vermeiden, ist vorteilhaft zwischen dem Antriebsmotor und der Aufnahmespindel eine bei Ueberschreiten eines vorbestimmten Drehmomentes die Uebertragung der Drehbewegung unterbrechende Ueberlastkupplung angeordnet. Nach dem Auslösen einer solchen Ueberlastkupplung können, in Richtung der Drehmomentübertragung gesehen, die vor der Ueberlastkupplung liegenden Bauteile weiterlaufen, während die Aufnahmespindel durch die Schlingfeder abgebremst wird. Durch das beim Betätigen der Schlingfeder auftretende Bremsmoment wird das für das Ansprechen der Ueberlastkupplung erforderliche, durch die Bedienungsperson aufzubringende Reaktionsmoment entsprechend verkleinert. Die Ueberlastkupplung wird somit auch dann ausgelöst, wenn die Bedienungsperson darauf nicht vorbereitet ist.

Die Erfindung soll nachstehend anhand der sie beispielsweise wiedergebenden Zeichnungen näher erläutert werden. Es zeigen:

Fig. 1 ein Ausschnitt eines erfindungsgemässen Handgerätes, im Schnitt dargestellt;

Fig. 2 einen Querschnitt durch das in Fig. 1 dargestellte Handgerät, entlang der Linie II-II.

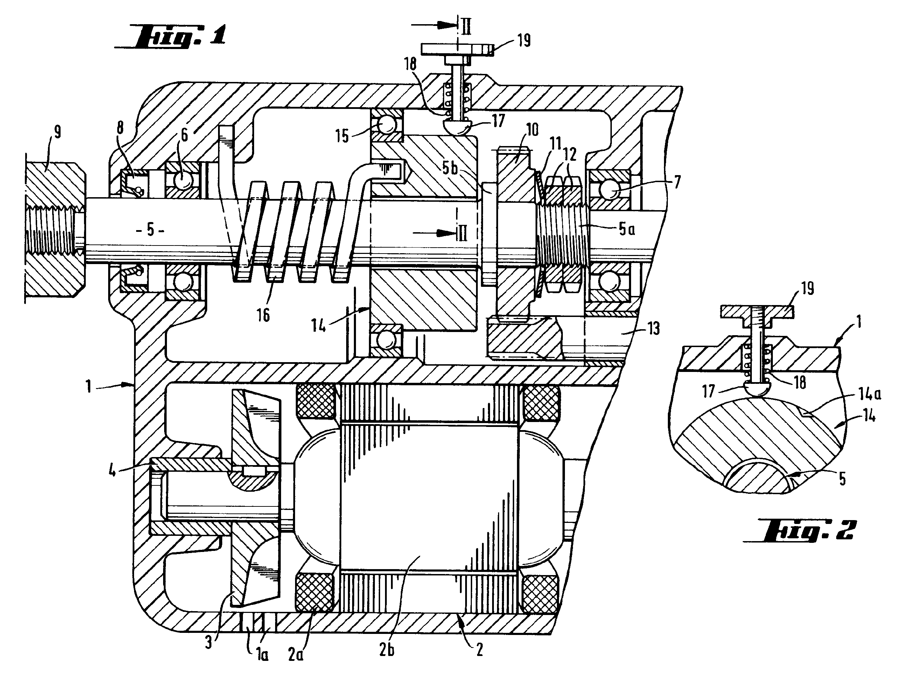

Das aus Fig. 1 und 2 ersichtliche Handgerät weist ein Gehäuse 1 auf. Im Gehäuse 1 ist ein Antriebsmotor 2 angeordnet. Der Antriebsmotor 2 besteht im wesentlichen aus einem Stator 2a und einem Rotor 2b. Auf der Welle des Rotors 2b ist ein Lüfterrad 3 angeordnet. Das Lüfterrad 3 saugt Kühlluft durch den Stator 2a und bläst diese über Luftaustrittsöffnungen 1a im Gehäuse 1 ins Freie. Der Rotor 2b ist in einer Lagerbüchse 4 im Gehäuse 1 drehbar gelagert. Parallel zur Achse des Rotors 2b ist eine Aufnahmespindel 5 über Wälzlager 6, 7 im Gehäuse 1 drehbar gelagert. Ein mit der Aufnahmespindel 5 zusammenwirkender Dichtungsring 8 verhindert einerseits das Austreten von Schmierstoff aus dem Gehäuse 1 und andererseits ein Eindringen von Verschmutzung in das Gehäuse 1.

Ein das Gehäuse 1 überragender Teil der Aufnahmespindel 5 ist mit einem der Aufnahme von nicht dargestellten Werkzeugen dienenden Werkzeughalter 9 verbunden. Im Bereich des Lagers 7 ist ein Zahnrad 10 auf der Aufnahmespindel 5 angeordnet. Das Zahnrad 10 wird durch eine Tellerfeder 11 gegen einen Bund 5b der Aufnahmespindel 5 geschoben. Die Vorspannung der Tellerfeder 11 ist mittels zweier auf einem Aussengewinde 5a gegeneinander verkonterbarer Ringmuttern 12 einstellbar. Das Zahnrad 10, die Tellerfeder 11, der Bund 5b und die Ringmuttern 12 bilden zusammen eine Ueberlastkupplung, welche das vom Zahnrad 10 auf die Aufnahmespindel 5 übertragbare Drehmoment begrenzt. Das Zahnrad 10 steht im Eingriff mit einer Ritzelwelle 13. Wird das zu übertragende Drehmoment zu gross, so rutscht das Zahnrad 10 auf der Aufnahmespindel 5 und die Uebertragung des Drehmomentes von der Ritzelwelle 13 auf die Aufnahmespindel 5 wird unterbrochen. Koaxial zur Aufnahmespindel 5 ist eine Trägheitsmasse 14 über ein Wälzlager 15 im Gehäuse 1 drehbar gelagert. Die Trägheitsmasse 14 ist über eine die Aufnahmespindel 5 umfassende Schlingfeder 16 mit dem Gehäuse 1 verbunden. Bei einer Relativverdrehung der Trägheitsmasse 14 gegenüber dem Gehäuse 1 in der einen Drehrichtung wird die Schlingfeder 16 in Kontakt gebracht mit der Aufnahmespindel 5 und übt auf diese ein Bremsmoment aus. Eine solche Relativverdrehung kommt zustande, wenn ein im Werkzeughalter 9 angeordnetes Werkzeug verklemmt, so dass die Aufnahmespindel 5 blockiert wird. Durch das vom Antriebsmotor 2 weiterhin ausgeübte Drehmoment wird somit das Gehäuse um die Aufnahmespindel 5 beschleunigt. Die Trägheitsmasse 14 bleibt infolge ihrer Massenträgheit stehen und es erfolgt eine Relativverdrehung des Gehäuses 1 gegenüber der Trägheitsmasse 14. Durch das von der Schlingfeder 16 auf die Aufnahmespindel 5 ausgeübte Bremsmoment wird ein weiteres Verdrehen des Gehäuses 1 verhindert. Das Bremsmoment führt schliesslich auch zum Auslösen der durch das Zahnrad 10 und die Tellerfeder 11 gebildeten Ueberlastkupplung. Um ein Zurückdrehen der Trägheitsmasse 14 und dadurch ein vorzeitiges Aufheben des Bremsmomentes zu verhindern, ist eine Rasteinrichtung vorgesehen. Diese besteht aus einem Rastbolzen 17, welcher mittels einer Druckfeder 18 gegen den Umfang der Trägheitsmasse 14 gedrückt wird. Die Trägheitsmasse 14 weist eine Rastvertiefung 14a auf, in welche nach einer bestimmten Verdrehung des Gehäuses 1 gegenüber der Trägheitsmasse 14 der Rastbolzen 17 einrastet. Der Rastbolzen 17 ist mit einem Betätigungshebel 19 verbunden. Nach dem Abschalten des Antriebsmotors 2 kann der Rastbolzen 17 mittels des Betätigungshebels 19 entgegen der Kraft der Druckfeder 18 nach aussen gezogen und somit aus der Rastvertiefung 14a ausgerückt werden. Die bis zu diesem Zeitpunkt gespannte Schlingfeder 16 kann sich somit entspannen und die Trägheitsmasse 14 gegenüber dem Gehäuse 1 in ihre Ausgangslage zurückdrehen. Somit wird die Aufnahmespindel 5 freigegeben und die ganze Einrichtung ist wiederum einsatzbereit.

**Patentansprüche**

1. Motorisch betriebenes Handgerät, wie Bohrhammer, Bohroder Schleifmaschine und dgl., mit einem Gehäuse (1) und einem darin angeordneten Antriebsmotor (2), einer aus dem Gehäuse ragenden Aufnahmespindel (5) zur Uebertragung einer Drehbewegung auf ein Werkzeug und einer im Gehäuse koaxial zur Aufnahmespindel drehbar gelagerten, über ein Federelement (16) mit dem Gehäuse (1) verbundenen Trägheitsmasse (14), **dadurch gekennzeichnet**, dass die Trägheitsmasse (14) die Aufnahmespindel (5) umgibt und das Federelement als die Aufnahmespindel (5) umfassende, bei einer Relativverdrehung des Gehäuses (1) gegenüber der Trägheitsmasse (14) in der einen Drehrichtung auf die Aufnahmespindel (5) ein Bremsmoment ausübende Schlingfeder (16) ausgebildet ist.

2. Handgerät nach Anspruch 1, dadurch gekennzeichnet, dass zwischen der Trägheitsmasse (14) und dem Gehäuse (1) ein Rastelement (17) vorgesehen ist, das bei Einleitung eines durch die Schlingfeder (16) ausgeübten Bremsmomentes einrückbar ist.

3. Handgerät nach einem der Ansprüche 1 oder 2, dadurch gekennzeichnet, dass zwischen dem Antriebsmotor (2) und der Aufnahmespindel (5) eine bei Ueberschreiten eines vorbestimmten Drehmomentes die Uebertragung der Drehbewegung unterbrechende Ueberlastkupplung angeordnet ist.

## Revendications

1. Outillage à main motorisé, tel que marteau perforateur, perceuse ou ponceuse et analogues, comprenant un boîtier (1) dans lequel est logé un moteur d'entraînement (2), une broche de fixation (5) dépassant du boîtier et servant à transmettre un mouvement de rotation à un outil, et une masse d'inertie (14) montée de manière tournante dans le boîtier, coaxialement avec la broche de fixation, et reliée au boîtier (1) par l'intermédiaire d'un élément de ressort (16), **caractérisé en ce que** la masse d'inertie (14) enveloppe la broche de fixation (5) et que l'élément de ressort est conformé en ressort enroulé (16) qui entoure la broche de fixation (5) et exerce, lors d'une rotation relative du boîtier (1) par rapport à la masse d'inertie (14) dans l'un des sens de rotation, un couple de freinage sur la broche de fixation (5).

2. Outillage selon la revendication 1, caractérisé en ce qu'entre la masse d'inertie (14) et le boîtier (1) est prévu un élément d'arrêt (17) qui peut être enclenché lors de l'introduction d'un couple de freinage exercé par le ressort enroulé (16).

3. Outillage à main selon l'une des revendications 1 ou 2, caractérisé en ce qu'entre le moteur d'entraînement (2) et la broche de fixation (5) est monté un accouplement de surcharge qui interrompt la transmission du mouvement de rotation lors du dépassement d'un couple de rotation prédéterminé.

## Claims

1. A motor-driven hand tool, such as a hammer drill, drilling or grinding machine and the like, with a housing (1) and a driving motor (2) arranged therein, a reception spindle (5), projecting out of the housing, for the transmission of a rotary motion to a tool and an inertia mass (14) which is rotatably mounted in the housing coaxially to the reception spindle and which is connected by way of a spring element (16) to the housing (1), **characterised in that** the inertia mass (14) surrounds the reception spindle (5) and the spring element is designed as a loop spring (16) which embraces the reception spindle (5) and which exerts a braking moment on the reception spindle (5) upon a relative rotation of the housing (1) relative to the inertia mass (14) in the one direction of rotation.

2. A hand tool according to claim 1, characterised in that a detent element (17) which is engageable upon initiation of a braking moment exerted by the loop sprint (16) is provided between the inertia mass (14) and the housing (1).

3. A hand tool according to one of claims 1 or 2, characterised in that an overload clutch which interrupts the transmission of the rotary motion when a predetermined torque is exceeded is arranged between the driving motor (2) and the reception spindle (5).

Fig. 1

Fig. 2